# EUROPEAN PATENT APPLICATION

(11) **EP 2 849 039 A1**
(43) Date of publication of application: **18.03.2015**
(21) Application number: 12880024.0
(22) Date of filing: 26.12.2012
(51) Int. Cl.: G06F 3/044

(54) **METHOD, DEVICE, AND MOBILE TERMINAL FOR DETECTING CAPACITIVE TOUCH SCREEN**

(30) Priority: 29.06.2012 CN 201210222802
(71) Applicant: Huawei Device Co., Ltd., Shenzhen, Guangdong 518129 (CN)
(72) Inventor: WANG, Kui, Shenzhen Guangdong 518129 (CN); SHI, Yukun, Shenzhen Guangdong 518129 (CN)
(74) Representative: Haley, Stephen
(86) International application number: PCT/CN2012/087475
(87) International publication number: WO 2014/000402

(57) **Abstract**

Embodiments of the present invention provide a method and an apparatus for testing a capacitive touchscreen, and a mobile terminal, which can improve testing efficiency of the touchscreen. The method includes: obtaining a response information set for a touch operation according to a response of the touchscreen to the touch operation in a preset area; and determining that a working state of the touchscreen is abnormal if the response information set for the touch operation is inconsistent with a preset response information set, where the preset response information set is the response to the touch operation in the preset area when the working state of the touchscreen is normal. The embodiments of the present invention are applicable to the field of touchscreen technologies.

## Description

### CROSS-REFERENCE TO RELATED APPLICATION

This application claims priority to Chinese Patent Application No. 201210222802.8, filed with the Chinese Patent Office on June 29, 2012 and entitled "METHOD AND APPARATUS FOR TESTING CAPACITIVE TOUCHSCREEN, AND MOBILE TERMINAL", which is incorporated herein by reference in its entirety.

### TECHNICAL FIELD

The present invention relates to the field of touchscreen technologies, and in particular, to a method and an apparatus for testing a capacitive touchscreen, and a mobile terminal.

### BACKGROUND

As a man-machine interaction apparatus of an electronic device, a touchscreen is increasingly widely applied.

In the prior art, a touchscreen of an electronic device needs to be tested before the electronic device leaves the factory. For example, in order to perform testing quickly, an electronic device is usually tested merely by human touch, and a track of the human touch is displayed in real time. If the track is consistent with the track of the human touch, it indicates that the touchscreen is normal; if the track is inconsistent with the track of the human touch, for example, a phenomenon of disconnection exists or the track drifts, it indicates that there is a problem of a disconnected circuit or a short circuit in ITO of the touchscreen.

However, if the foregoing testing method is used, whether the touchscreen is faulty needs to be manually determined, which causes poor testing efficiency of the testing method.

### SUMMARY

Embodiments of the present invention provide a method and an apparatus for testing a capacitive touchscreen, and a mobile terminal, which can improve testing efficiency of the touchscreen.

To achieve the foregoing objective, the embodiments of the present invention use the following technical solutions:

According to one aspect, an embodiment of the present invention provides a method for testing a capacitive touchscreen, where the method includes:
obtaining a response information set for a touch operation according to a response of the touchscreen to the touch operation in a preset area; and
determining that a working state of the touchscreen is abnormal if the response information set is inconsistent with a preset response information set, where the preset response information set is the response to the touch operation in the preset area when the working state of the touchscreen is normal.

According to another aspect, an embodiment of the present invention further provides an apparatus for testing a capacitive touchscreen, where the apparatus includes: a touchscreen and a processor, where:
the touchscreen is configured to respond to a touch operation in a preset area, and send response information to the processor; and
the processor is configured to receive the response information sent by the touchscreen, to obtain a response information set for the touch operation; and determine that a working state of the touchscreen is abnormal if the response information set for the touch operation is inconsistent with a preset response information set.

According to still another aspect, an embodiment of the present invention further provides a mobile terminal, including the foregoing apparatus for testing a capacitive touchscreen.

In the method and apparatus for testing a capacitive touchscreen, and the mobile terminal provided in the embodiments of the present invention, according to an obtained response information set on the touchscreen for a touch operation and a preset response information set, whether a working state of the touchscreen is normal can be automatically determined without requiring manual determining, thereby improving testing efficiency of the touchscreen.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for testing a capacitive touchscreen according to an embodiment of the present invention;
FIG. 2 is a schematic structural diagram of a projective capacitive touchscreen;
FIG. 3 is a schematic flowchart of another method for testing a capacitive touchscreen according to an embodiment of the present invention;
FIG. 4 is a schematic flowchart of still another method for testing a capacitive touchscreen according to an embodiment of the present invention;
FIG. 5 is a schematic diagram of a display area and a non-display area of a touchscreen; and
FIG. 6 is a schematic structural diagram of an apparatus for testing a capacitive touchscreen according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

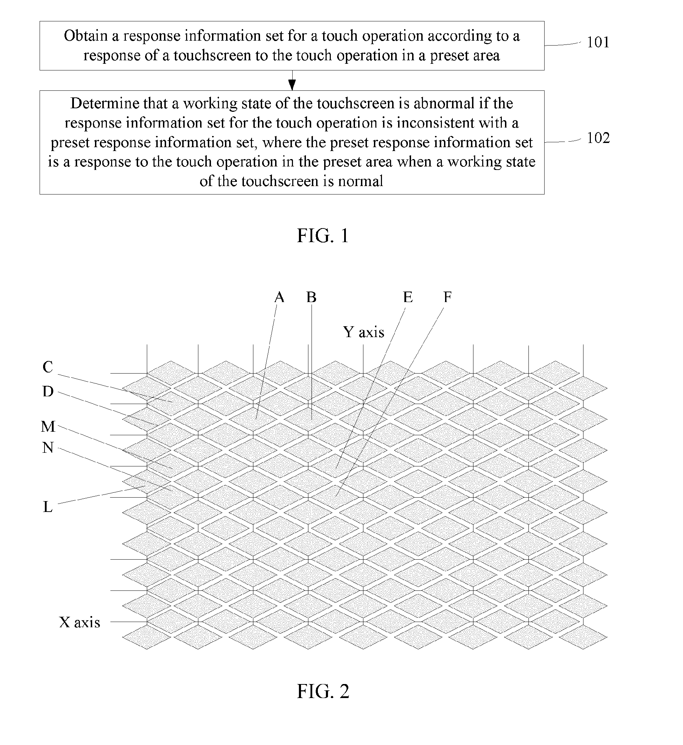

As shown in FIG. 1, the embodiment of the present invention provides a method for testing a capacitive touchscreen. The method may be applied to an electronic device on which a touchscreen is integrated and which may specifically be, for example, a mobile phone or a PAD. The method includes:

101. Obtain a response information set for a touch operation according to a response of the touchscreen to the touch operation in a preset area.

102. Determine that a working state of the touchscreen is abnormal if the response information set for the touch operation is inconsistent with a preset response information set.

After the touchscreen receives the touch operation in the preset area, a capacitance value of a touch point in the preset area changes if the touch point that is in the preset area and corresponding to the touch operation is not shorted or disconnected, where the touch point in the preset area reports at least one of an interrupt signal and a coordinate position of the touch point to the electronic device. In this way, the electronic device obtains the response information set for the touch operation according to the response of the touchscreen to the touch operation.

The electronic device stores a preset response information set, so that the electronic device can test whether the working state of the touchscreen is normal. The preset response information set is the response to the touch operation in the preset area when the working state of the touchscreen is normal. In this way, if the response information set, obtained by the electronic device, for the touch operation is inconsistent with the preset response information set, the electronic device determines that the working state of the touchscreen is abnormal.

Correspondingly, if the response information set, obtained by the electronic device, for the touch operation is consistent with the preset response information set, the electronic device determines that the working state of the touchscreen is normal.

In the method for testing a capacitive touchscreen provided in the embodiment of the present invention, in the method, whether an obtained response information set on the touchscreen for a touch operation in a preset area is consistent with a preset response information set is determined, and according to a result of the determining, whether a working state of the touchscreen is normal can be automatically determined without requiring manual determining, thereby improving testing efficiency of the touchscreen.

### Embodiment 2

This embodiment is described by using a structure of a projective capacitive touchscreen as an example. As shown in FIG. 2, horizontal and vertical electrodes, that is, electrodes on an X axis and a Y axis shown in FIG. 2, are made on a glass surface of the projective capacitive touchscreen, where electrodes in each row are mutually connected and electrodes in each column are also mutually connected. When a finger touches a touch area, a touch point on the X axis and the Y axis of the touch area generates mutual capacitance. After a capacitance value of the touch point changes, the touchscreen may send an interrupt signal to an electronic device, or the touchscreen reports a position of the touch point on the touchscreen to an electronic device according to a position of an electrode on the X axis and the Y axis. Certainly, the touchscreen may still report the interrupt signal and the position of the touch point to the electronic device.

To test whether a display area of the touchscreen works normally, a preset area corresponding to a touch operation can cover at least one electrode on each X axis and at least one electrode on each Y axis because electrodes in each row are mutually connected and electrodes in each column are mutually connected.

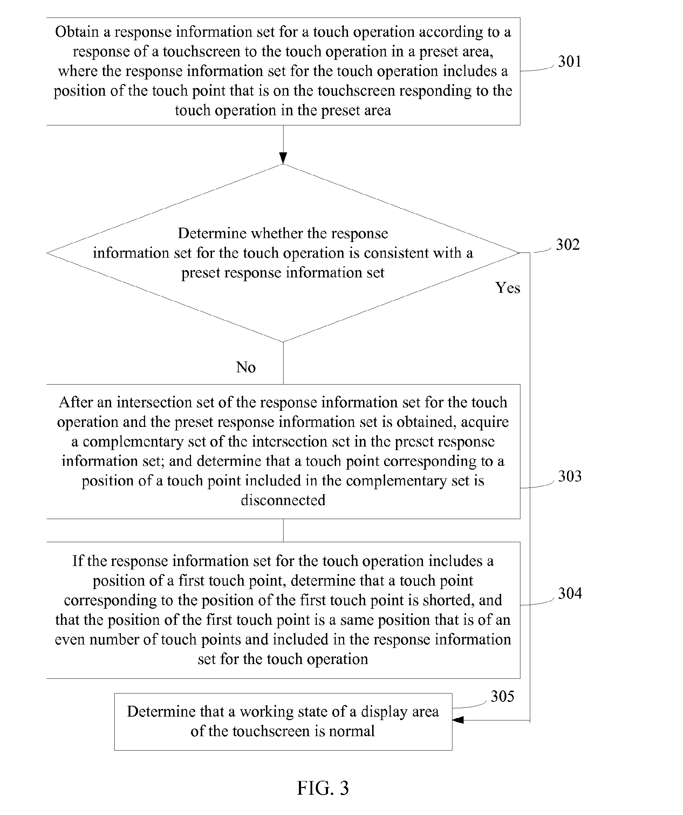

As shown in FIG. 3, the embodiment of the present invention provides a method for testing a capacitive touchscreen. The method may be used to determine a position at which a working state of a display area of the touchscreen is abnormal and a fault type. The touch operation is performed along a preset area, where the preset area is in the display area of the touchscreen. A response information set for the touch operation includes a coordinate position of a touch point that is on the touchscreen responding to the touch operation in the preset area. The method includes:

301. Obtain a response information set for a touch operation according to a response of the touchscreen to the touch operation in the preset area, where the response information set for the touch operation includes a position of a touch point that is on the touchscreen responding to the touch operation in the preset area.

302. Determine whether the response information set for the touch operation is consistent with a preset response information set.

If the response information set for the touch operation is inconsistent with the preset response information set, step 303 is performed.

If the response information set for the touch operation is consistent with the preset response information set, step 305 is performed.

303. After an intersection set of the response information set for the touch operation and the preset response information set is obtained, acquire a complementary set of the intersection set in the preset response information set; and determine that a touch point corresponding to a position of a touch point included in the complementary set is disconnected.

304. If the response information set for the touch operation includes a position of a first touch point, determine that a touch point corresponding to the position of the first touch point is shorted, where the position of the first touch point is a same position that is of an even number of touch points and included in the response information set for the touch operation.

305. Determine that a working state of a display area of the touchscreen is normal.

As shown in FIG. 2, the touchscreen exemplarily includes 9 X axes and 9 Y axes; a preset area is defined by moving, along the leftmost end of the touchscreen, downward to the lowest end of the touchscreen, and then moving, from left to right, to the rightmost end of the screen. When the working state of the touchscreen is normal, if response information of the touchscreen for the touch operation includes 18 touch points, the preset response information set includes position information of the 18 touch points.

If an electrode A and an electrode B in the second row of the X axis are disconnected, and electrodes in the third row of the X axis cannot be connected, a capacitance change cannot be caused between an electrode C and an electrode D, the touchscreen cannot sense a capacitance change of a touch point formed by the electrode C and the electrode D, and does not report an interrupt signal to the electronic device, and the electronic device also cannot receive the interrupt signal reported by the touchscreen. Therefore, in order to determine a position at which the working state of the display area of the touchscreen is abnormal and a fault type, to facilitate repair, an intersection set of a response information set on the touchscreen for a touch operation in the preset area and a preset response information set needs to be obtained first. In this way, a touch point corresponding to a position of a touch point included in a complementary set of the intersection set in the preset response information set is determined to be disconnected.

If an electrode E in the fourth row of the X axis and an electrode F in the fifth row of the X axis are shorted, and because electrodes in the fourth row are mutually connected, and electrodes in the fifth row are also mutually connected, in this case, when the touch operation moves to an electrode M at the leftmost end of the fourth row of the X axis, not only a capacitance change between the electrode M and an electrode L that is in the first column of the Y axis but also a capacitance change between an electrode N at the leftmost end of the fifth row of the X axis and the electrode L are caused. Similarly, when the touch operation moves to the electrode N at the leftmost end of the fifth row of the X axis, not only a capacitance change between the electrode N and the electrode L but also a capacitance change between the electrode M and the electrode L are caused. In this case, the touchscreen reports a position of a touch point formed by the electrode M and the electrode L and a position of a touch point formed by the electrode N and the electrode L separately to the electronic device, that is, twice. Therefore, for the position of the first touch point involved in responding to the touch operation, the position of the first touch point is a same position that is of an even number of touch points and included in the response information set for the touch operation.

If the electronic device determines that the display area of the touchscreen is disconnected or shorted, a manner of giving an alarm, a manner of displaying an abnormal pattern on the touchscreen, or the like may be used, which is not specifically limited in this embodiment.

Certainly, if it is only for testing whether the working state of the display area of the touchscreen is normal, a response message that is of the touchscreen for the touch operation in the preset area and is obtained by the electronic device only needs to include: at least one of the number of touch points that are responded to and a position of a touch point that is responded to. In this case, the electronic device only needs to determine whether the response information set for the touch operation is consistent with the preset response information set. If the response information set for the touch operation is consistent with the preset response information set, the working state of the touchscreen is normal; and if the response information set for the touch operation is inconsistent with the preset response information set, that is, the numbers of touch points and/or the positions of the touch points included in the two sets are different, the working state of the touchscreen is abnormal.

If the electronic device determines that the display area of the touchscreen is disconnected or shorted, a manner of giving an alarm, a manner of displaying an abnormal pattern on the touchscreen, or the like may be used, which is not specifically limited in this embodiment.

It should be noted that in this embodiment, an exemplary preset area is defined by moving, along the leftmost end of the touchscreen, downward to the lowest end of the touchscreen, and then moving, from left to right, to the rightmost end of the screen. However, the preset area may also be another area, as long as the preset area can cover at least one electrode in each row and at least one electrode in each column, which is not specifically limited in this embodiment.

In addition, there is no necessary sequence relationship between step 303 and step 304 in the embodiment of the present invention. As long as it is determined that response information for the touch operation is inconsistent with preset response information after the response information for the touch operation is obtained, whether the touchscreen is shorted can be determined first, or whether the touchscreen is disconnected can be determined first, which is not specifically limited in the embodiment of the present invention.

In the method for testing a capacitive touchscreen provided in the embodiment of the present invention, according to an obtained response information set on the touchscreen for a touch operation in the preset area and the number of touch points and/or a coordinate position of a touch point included in a preset response information set, whether a working state of the touchscreen is normal can be automatically determined, and a fault position of the touchscreen, such as a type in which there is a disconnected circuit or a short circuit, can be determined according to the coordinate position of the touch point without requiring manual determining, thereby improving testing efficiency of the touchscreen.

### Embodiment 3

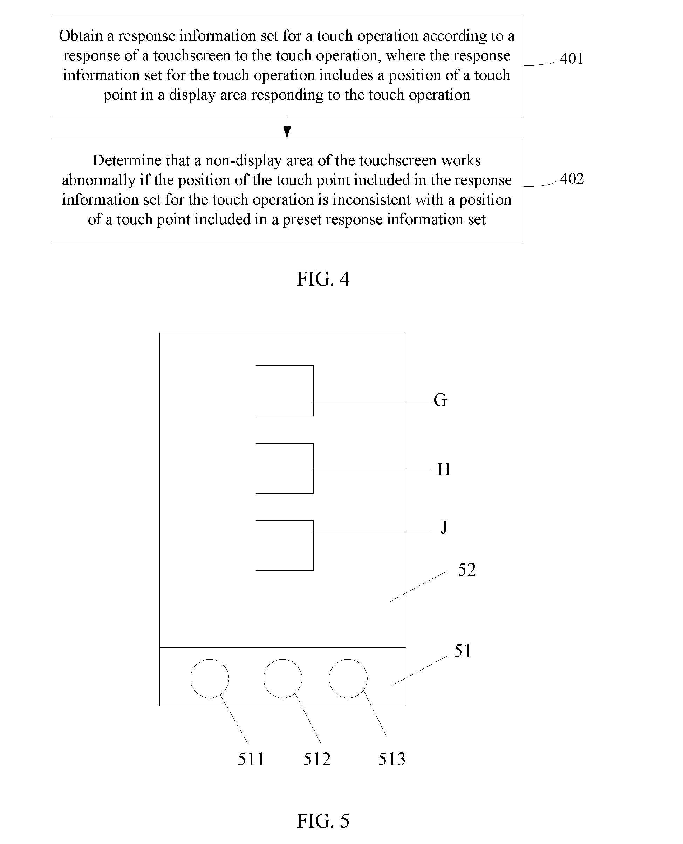

As shown in FIG. 4, to test whether a working state of a touch key in a non-display area is normal, the embodiment of the present invention further provides a method for testing a capacitive touchscreen. In this embodiment, the non-display area is a key that can be used for touching on an electronic device. If a position of the touch key is outside a display area, the preset area is in the non-display area, and specifically is the touch key in the non-display area. The preset response information set includes a position of a preset touch point in the display area. The method includes:

401. Obtain a response information set for a touch operation according to a response of the touchscreen to the touch operation, where the response information set for the touch operation includes a position of a touch point in a display area responding to the touch operation.

402. Determine that a non-display area of the touchscreen works abnormally if the position of the touch point included in the response information set for the touch operation is inconsistent with the position of the touch point included in the preset response information set.

As shown in FIG. 5, a preset response information set for a touch key 511 in the non-display area 51 is a coordinate position of a touch point G in a display area 52, a preset response information set for a touch key 512 in the non-display area 51 is a coordinate position of a touch point H in the display area 52, and a preset response information set for a touch key 513 in the non-display area 51 is a coordinate position of a touch point J in the display area 52. If working states of the touch keys 511, 512, and 513 are normal, the touch points G, H and J in the display area 52 respond when the three keys are touched. If the touch key 511 is disconnected, response information for the touch operation obtained by the electronic device does not include the coordinate position of the touch point G. Correspondingly, if the H and the J are disconnected, a same problem occurs. If the touch key 511 and the touch key 512 are shorted, the response information for the touch operation obtained by the electronic device includes the coordinate positions of the touch points G and H; and therefore, it may also be determined that the touch key 511 and the touch key 512 are shorted.

In this embodiment, a display area of a touchscreen is used to test a touch key of an electronic device. If a touch operation is performed on a touch key, and a coordinate position of a touch point that responds in the display area of the touchscreen is consistent with a coordinate position of a preset touch point, it is determined that the touch key works normally; and if the coordinate position of the touch point that responds in the display area of the touchscreen is inconsistent with the coordinate position of the preset touch point, it is determined that a working state of the touch key is abnormal.

In the method for testing a touchscreen provided in the embodiment of the present invention, according to an obtained response information set on the touchscreen for a touch operation in the preset area and a coordinate position of a touch point included in a preset response information set, whether a working state of a touch key on the touchscreen is normal can be automatically determined without requiring manual determining, thereby improving testing efficiency of the touchscreen.

### Embodiment 4

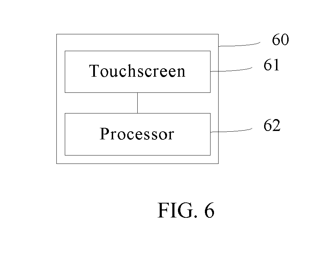

As shown in FIG. 6, the embodiment of the present invention further provides an apparatus for testing a capacitive touchscreen. A touchscreen is integrated on the apparatus, and the apparatus includes a touchscreen 61 and a processor 62.

The touchscreen 61 is configured to respond to a touch operation in a preset area, and send response information to the processor.

The processor 62 is configured to receive the response information sent by the touchscreen, to obtain a response information set for the touch operation; and determine that a working state of the touchscreen is abnormal if the response information set for the touch operation is inconsistent with a preset response information set.

After the touchscreen 61 receives the touch operation, if a touch point that is in a touch area and touched by the touch operation is not shorted or disconnected, a capacitance value of the touch point in the touch area changes, and the touch point reports at least one of an interrupt signal and a coordinate position of the touch point to the processor 62. Because multiple touch points on the touchscreen may be touched in turn by touch operations, the processor 62 obtains the response information set for the touch operation according to a response of the touchscreen to the touch operation.

To test whether the working state of the touchscreen is normal, the apparatus 60 stores the preset response information set. In this way, if the response information set for the touch operation obtained by the processor 62 is inconsistent with the preset response information set, the processor 62 determines that the working state of the touchscreen is abnormal.

If the response information set for the touch operation obtained by the processor 62 is consistent with the preset response information set, the processor 62 determines that the working state of the touchscreen is normal.

Specifically, when whether the working state of a display area of the touchscreen is normal is tested, the preset area is in the display area of the touchscreen.

The response information set for the touch operation includes at least one of the number of touch points and a position of a touch point, where the touch point is on the touchscreen responding to the touch operation in the preset area.

The preset response information set includes at least one of the number of touch points and a position of a touch point when the working state of the touchscreen is normal, where the touch point is on the touchscreen responding to the touch operation in the preset area.

If it is only for testing whether the working state of the display area of the touchscreen is normal, that the processor 62 determines that the working state of the touchscreen is abnormal specifically includes:
if the number of the touch points and/or the position of the touch point included in the response information set for the touch operation is inconsistent with the number of preset touch points and/or a position of a preset touch point included in the preset response information set, determining that the working state of the touchscreen 61 is abnormal.

If it is for testing the position at which a working state of the display area of the touchscreen 61 is abnormal and a fault type, that the processor 62 determines that the working state of the display area of the touchscreen 61 is abnormal specifically includes:
after an intersection set of the response information set for the touch operation and the preset response information set is obtained, acquiring a complementary set of the intersection set in the preset response information set; and determining that a touch point corresponding to a position of a touch point included in the complementary set is disconnected; and
if the response information set for the touch operation includes a position of a first touch point, determining that a touch point corresponding to the position of the first touch point is shorted, where the position of the first touch point is a same position that is of an even number of touch points and included in the response information set for the touch operation.

When it is tested whether a working state of a touch key in a non-display area of the touchscreen 61 is normal, the preset area is a non-display area of the touchscreen, and specifically may be any touch key.

The response information set for the touch operation includes a position of the touch point in the display area responding to the touch operation.

The preset response information set includes a position of a preset touch point in the display area.

That the processor 62 determines that a working state of the non-display area of the touchscreen 61 is abnormal specifically includes:
determining that the non-display area of the touchscreen works abnormally if the position of the touch point included in the response information set for the touch operation is inconsistent with the position of the touch point included in the preset response information set.

In the apparatus for testing a capacitive touchscreen provided in the embodiment of the present invention, according to a response information set, obtained by a processor, on the touchscreen for a touch operation and the number of touch points and/or a coordinate position of a touch point included in a preset response information set, the processor can automatically determine whether a working state of a touch key on the touchscreen is normal without requiring manual determining, thereby improving testing efficiency of the touchscreen.

It should be noted that, the apparatus for testing a capacitive touchscreen provided in the foregoing embodiment of the present invention may specifically be an electronic device on which the touchscreen integrated, for example, a mobile phone or a computer.

An embodiment of the present invention further provides a mobile terminal, including the apparatus for testing a capacitive touchscreen provided in the foregoing embodiment, and a specific structure thereof is not described herein again.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for testing a capacitive touchscreen, wherein the method comprises:
obtaining a response information set for a touch operation according to a response of the touchscreen to the touch operation in a preset area; and
determining that a working state of the touchscreen is abnormal if the response information set for the touch operation is inconsistent with a preset response information set, wherein the preset response information set is the response to the touch operation in the preset area when the working state of the touchscreen is normal.

2. The method according to claim 1, wherein:
the preset area is in a display area of the touchscreen; and
the response information set for the touch operation comprises at least one of the number of touch points and a position of a touch point, wherein the touch point is on the touchscreen responding to the touch operation in the preset area; and the preset response information set comprises at least one of the number of touch points and a position of a touch point when the working state of the touchscreen is normal, wherein the touch point is on the touchscreen responding to the touch operation in the preset area.

3. The method according to claim 2, wherein the method further comprises:
after an intersection set of the response information set for the touch operation and the preset response information set is obtained, acquiring a complementary set of the intersection set in the preset response information set; and determining that a touch point corresponding to a position of a touch point comprised in the complementary set is disconnected.

4. The method according to claim 2 or 3, wherein the method further comprises: if the response information set for the touch operation comprises a position of a first touch point, determining that a touch point corresponding to the position of the first touch point is shorted, wherein the position of the first touch point is a same position that is of an even number of touch points and comprised in the response information set for the touch operation.

5. The method according to claim 1, wherein the preset area is a non-display area of the touchscreen;
the response information set for the touch operation comprises a position of a touch point in a display area responding to the touch operation; and
the preset response information set comprises a position of a preset touch point in the display area.

6. An apparatus for testing a capacitive touchscreen, wherein the apparatus comprises: a touchscreen and a processor, wherein:
the touchscreen is configured to respond to a touch operation in a preset area, and send response information to the processor; and
the processor is configured to receive the response information sent by the touchscreen, to obtain a response information set for the touch operation; and determine that a working state of the touchscreen is abnormal if the response information set for the touch operation is inconsistent with a preset response information set.

7. The apparatus according to claim 6, wherein the preset area is in a display area of the touchscreen;
the response information set for the touch operation comprises at least one of the number of touch points and a position of a touch point, wherein the touch point is on the touchscreen responding to the touch operation in the preset area; and
the preset response information set comprises at least one of the number of touch points and a position of a touch point when the working state of the touchscreen is normal, wherein the touch point is on the touchscreen responding to the touch operation in the preset area.

8. The apparatus according to claim 7, wherein:
the processor is further configured to: obtain an intersection set of the response information set for the touch operation and the preset response information set, acquire a complementary set of the intersection set in the preset response information set; and determine that a touch point corresponding to a position of a touch point comprised in the complementary set is disconnected.

9. The apparatus according to claim 7 or 8, wherein:
the processor is further configured to: if the response information set for the touch operation comprises a position of a first touch point, determine that a touch point corresponding to the position of the first touch point is shorted, wherein the position of the first touch point is a same position that is of an even number of touch points and comprised in the response information set for the touch operation.

10. The apparatus according to claim 6, wherein the preset area is a non-display area of the touchscreen;
the response information set for the touch operation comprises a display area responding to the touch operation; and
the preset response information set comprises a position of a preset touch point in the display area.

11. A mobile terminal, comprising the apparatus according to any one of claims 6 to 10.
